# EUROPEAN PATENT SPECIFICATION

(11) **EP 0 510 060 B1**
(45) Date of publication and mention of the grant of the patent: **03.08.1994**
(21) Application number: 91902290.5
(22) Date of filing: 07.01.1991
(51) Int. Cl.: B60R 19/02, B60J 5/04, B62D 25/02

(54) **STRUCTURAL BEAM**
STRUKTURTRÄGER
POUTRE STRUCTURALE

(30) Priority: 09.01.1990 NO 900109
(43) Date of publication of application: 28.10.1992
(73) Proprietor: Norsk Hydro a.s., 0257 Oslo 2 (NO)
(72) Inventor: CLAUSEN, Edvin, List, DK-6270 Tonder (DK)
(74) Representative: Bleukx, Luc
(86) International application number: PCT/NO91/00002
(87) International publication number: WO 91/10582

(56) References cited:
- EP-A- 0 267 895
- EP-A- 0 330 759
- EP-A- 0 390 769
- DE-A- 3 606 024
- DE-A- 3 826 958
- DE-C- 3 709 489

## Description

The present invention relates to a beam applied as reinforcement of a vehicle body, in impact structures or the like, and more particularly to structural beams comprising a hollow shape having parallel deformation planes orientated perpendicularly to the load exposure.

Such beams are applied e.g. in car doors as protection for vehicle occupants against side collision. Apart from the request to absorb the applied impact energy the beam should also be as light as possible in order to avoid an unnecessary increase in the vehicle body weight. German laid open application number DE 3606024 describes a beam of this type being dimensioned over its whole length to absorb the actual maximal load. Consequently, the provided beams do not comply with the request regarding an optimal strength/weight relation.

From DE 380724 it is known to resolve the above problem by provision of a composed beam where one or more additional complementary shapes are connected to the hollow shape along the actual area being exposed to the load. DE-A-3 826 958 shows a composed beam consisting of two spot welded shapes being locally reinforced by means of outwardly or inwardly positioned and fastened additional shapes. Rather complicated solutions are presented in both the above cases, where the application of additional shapes results in extra working and increased manufacturing costs.

The object of the present invention is therefore to provide a weight optimized beam exhibiting a variable deformation resistance along its length without requirement for supplemental reinforcing elements or need of extensive working/machining of the beam.

This object is achieved according to the invention by provision of a beam comprising an integral, unitary extruded hollow shape having parallel deformation surfaces exhibiting a variable wall thickness along their longitudinal extension. According to its preferred embodiment the hollow shape is extruded having a rectangular cross-section configuration with two parallelly extending planes arranged perpendicularly to the load with a wall thickness gradually increasing from both sides of the shape towards a central deformation zone characterized by a maximal wall thickness. The central zone of the deformation plane on the predicted load side may be delimited against its end portions (rand zones) by laterally extending grooves to ensure a controlled folding of the shape.

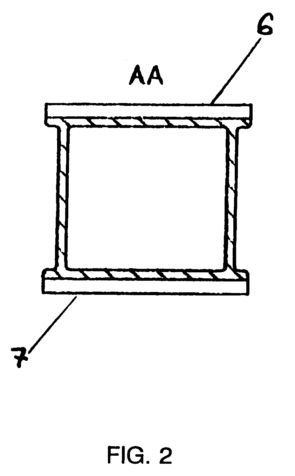

The invention will in the following be described in more details referring to the accompanying drawings, Figs. 1-2, where
- Fig. 1: shows schematically the hollow shape in a longitudinal cross-section, and
- Fig. 2: illustrates a cross-section of the hollow shape taken along line A-A in Fig. 1.

The hollow shape 1 shown in the Figures has a substantially rectangular cross-section extruded with two plane parallelly extending planes or walls 2,3. These planes exhibit a gradually increasing wall thickness from the respective shape ends 4,5 towards central deformation zones 6,7 characterized by maximal wall thickness being dimensioned according to the expected load. The hollow shape having the desired longitudinal contour and wall thickness is provided ready to use in one simple extrusion operation without any need for following machining, removal of the excess material or similar operations. This can be done e.g. by means of a radially movable tool attached to the orifice of conventional extrusion dies, the tool being periodically lowered at predeterminated intervals and amplitudes to restrict the material flow and thus variate the wall thickness of the provided shape.

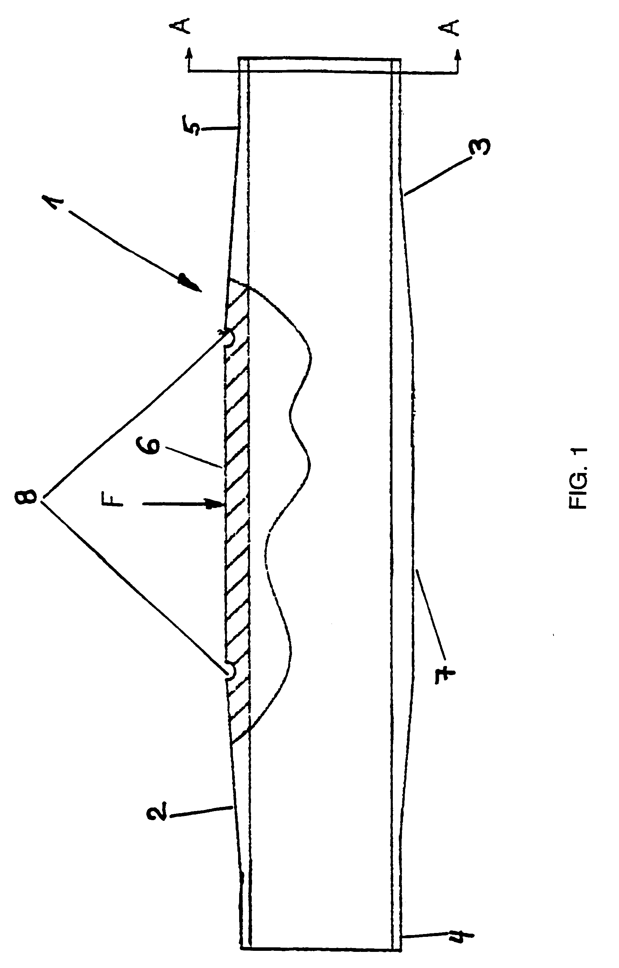

The deformation plane (surface) facing the load impact marked by F on Figure 1, is furthermore provided with two laterally and parallelly extending grooves or rills 8 which limit the deformation zone against the rand zones of the plane surface. This weakening of the wall thickness by means of grooves ensures that a controlled folding of the hollow shape will be achieved in a defined area on the deformation plane during energy absorption e.g. at a vehicle collision.

The hollow shape is preferentially provided as an extruded aluminium shape of a high strength Al-alloy.

The shown rectangular configuration of the beam shape is only one of possible embodiments. A hollow shape having e.g. flat oval or polygonal cross-section extruded in accordance with the invention having a variable wall thickness increasing from the shape ends towards a central deformation zone of the deformation planes can also be an actual shape configuration.

The obvious advantages of the beam according to the invention is the possibility to achieve an optimal strength/weight ratio within a given space, a minimal working/machining and controlled development of shape folding with predicted localization of deformation zones. The beam offers also a gliding, smooth surface, something which is advantageous for its adapting to other parts of the vehicle body.

## Claims

1. A beam for reinforcement of vehicle bodies, impact structures or the like comprising a hollow shape (1) having substantially parallel deformation planes,
**characterized in that**
the hollow shape (1) is an integral, unitary extruded shape exhibiting a variable wall thickness over its length at least along one of the deformation planes (2,3) orientated perpendicularly to the expected load exposure.

2. The beam according to claim 1,
**characterized in that**
the hollow shape (1) has substantially rectangular cross-section having two parallel longitudinally extending deformation planes (2,3) exhibiting maximal thickness at their middle zones (6,7).

3. The beam according to claim 1 or 2,
**characterized in that**
one of the deformation planes (2,3) is provided with one or more laterally extending grooves (8) locally weakening the wall thickness and defining a limited deformation zone for a controlled folding of the shape.

4. The beam according to claim 1, 2 or 3,
**characterized in that**
the hollow shape is extruded of aluminium or aluminium alloy.

## Patentansprüche

1. Träger für die Verstärkung von Karosserien Von Fahrzeugen, von Aufprallstrukturen oder ähnlichen Konstruktionen mit einer hohlen Form (1), die im wesentlichen parallele Verformungsflächen aufweist, dadurch gekennzeichnet, daß die hohle Form (1) eine integrale, einstückige, extrudierte Form darstellt und über ihre Längsausdehnung hinweg eine veränderliche Wandstärke aufweist, zumindest entlang einer der Verformungsflächen (2,3), welche senkrecht zu der erwarteten Belastungseinwirkung orientiert sind.

2. Träger gemäß Anspruch 1, dadurch gekennzeichnet, daß die hohle Form (1) einen im wesentlichen rechteckigen Querschnitt umfaßt und zwei parallele sich in Längsrichtung erstreckende Verformungsflächen (2,3) beinhaltet, welche in ihren mittleren Bereichen (6,7) eine maximale Wandstärke aufweisen.

3. Träger gemäß Anspruch 1 oder 2, dadurch gekennzeichnet, daß eine der Verformungsflächen (2,3) mit einem oder mehreren seitlich verlaufenden Einschnitten (8) versehen ist, welche die Wandstärke lokal schwächen und eine begrenzte Verformungszone zwecks Kontrolle des Zerknitterns der Form festlegen.

4. Träger gemäß Anspruch 1, 2 oder 3, dadurch gekennzeichnet, daß die hohle Form extrudiert wird und aus Aluminium oder einer Aluminiumlegierung besteht.

## Revendications

1. Poutre pour le renfort de carrosserie de véhicules, de structures antichocs ou de structures analogues, comprenant une forme creuse (1) ayant des plans de déformation sensiblement parallèles,
caractérisée en ce que la forme creuse (1) est une forme extrudée unitaire d'une pièce présentant une épaisseur de paroi variable sur sa longueur au moins le long d'un des plans de déformation (2, 3) orientés perpendiculairement à l'exposition à la charge attendue.

2. Poutre selon la revendication 1,
caractérisée en ce que la forme creuse (1) a une section transversale sensiblement rectangulaire ayant deux plans de déformation parallèles (2, 3) s'étendant longitudinalement et présentant une épaisseur maximum dans leurs zones centrales (6, 7).

3. Poutre selon la revendication 1 ou 2,
caractérisée en ce que l'un des plans de déformation (2, 3) est pourvu d'une ou plusieurs rainures (8) s'étendant latéralement, affaiblissant localement l'épaisseur de la paroi et définissant une zone de déformation limitée pour un pliage contrôlé de la forme.

4. Poutre selon la revendication 1, 2 ou 3
caractérisée en ce que la forme creuse est extrudée à partir d'aluminium ou d'un alliage d'aluminium.
